# DEMANDE DE BREVET EUROPEEN

(11) **EP 4 667 268 A1**
(43) Date de publication de la demande: **24.12.2025**
(21) Numéro de dépôt: 25182058.5
(22) Date de dépôt: 11.06.2025
(51) Int. Cl.: B60K 35/21, B60K 35/215, B60K 35/22, B60K 37/20, G01D 7/00, G01D 7/04, G01D 11/18, G01D 13/02, G01D 13/22

(54) **DISPOSITIF D AFFICHAGE POUR UN VÉHICULE AUTOMOBILE**

(30) Priorité: 17.06.2024 CH 6532024
(71) Demandeur: Concepto Holding SA, 2300 La Chaux-de-Fonds (CH)
(72) Inventeur: ROGNON, Benoit, 25570 Grand'Combe-Châteleu (FR); DIJKSTRA, François, 2057 Villiers (CH)
(74) Mandataire: Gsmart

(57) **Abrégé**

L'invention concerne un dispositif d'affichage pour véhicule automobile comprenant un cadran (3) muni d'indications (7), une aiguille (4, 6) montée sur un arbre (41, 49) et pointant vers les indications (7, 11), un moteur électrique (57, 58) apte à faire tourner l'arbre (41, 49) et l'aiguille (4, 6) via un mouvement mécanique (34), et dans lequel le cadran (3) est ajouré de façon à faire apparaitre le mouvement mécanique (34). Le mouvement mécanique (34) comprend un ressort de rappel (44, 53), agencé de façon à rappeler l'aiguille (4, 6) vers une position de repos.

L'invention concerne également un tableau de bord comprenant ledit dispositif.

## Description

### DOMAINE TECHNIQUE

La présente invention se rapporte à un dispositif d'affichage pour véhicule automobile et un tableau de bord pour un véhicule automobile équipé avec ledit dispositif d'affichage.

### ETAT DE LA TECHNIQUE

Un dispositif d'affichage, tel que celui équipant par exemple le tableau de bord d'un véhicule automobile, est connu pour afficher une ou plusieurs informations, pour être éclairé et pour satisfaire le conducteur. Le dispositif d'affichage peut s'allumer d'une seule couleur, la ou les aiguilles s'illuminer de la même couleur que les parties éclairées environnantes. Des perfectionnements ont été apportés pour améliorer ou modifier l'éclairage des dispositifs d'affichage existants afin de rendre les informations plus faciles à lire, tout en garantissant leur lecture rapide. Idéalement, le dispositif doit être conçu pour ne pas accroitre la fatigue des yeux du conducteur, qui survient après un temps prolongé sur la route, qui s'aggrave pendant la conduite de nuit.

Il existe des compteurs pour véhicule automobile qui comportent des éléments mécaniques pour contrôler la position de l'aiguille. Par exemple, le document WO 2008/104245 décrit un dispositif d'affichage comprenant une aiguille et un moyen d'entraînement, entre lesquels se trouve un engrenage. L'engrenage comprend un réducteur de type planétaire pour réduire le couple exercé sur l'aiguille.

Le document US 2011/137519 décrit un appareil permettant d'afficher des informations de l'environnement dans un véhicule. L'appareil comprend un cadran comprenant une première aiguille de cadran, une source de lumière ambiante avec une intensité lumineuse variable et une couleur de lumière variable, une première source de données et une seconde source de données, un sélecteur de mode pour choisir entre un premier mode de fonctionnement et un second mode de fonctionnement, et un dispositif de commande couplé au sélecteur de mode, à la source de lumière ambiante et à la première aiguille du cadran. Le dispositif de commande est configuré pour commander la position de la première aiguille de cadran en fonction de la première source de données, dans le premier mode de fonctionnement ; et commander au moins l'une parmi l'intensité lumineuse variable ou la couleur de lumière variable de la source de lumière ambiante en fonction de la deuxième source de données, dans le deuxième mode de fonctionnement.

La majorité des compteurs actuels sont des compteurs exclusivement électroniques qui ne comprennent pas de dispositifs mécaniques car ces derniers présentent plusieurs inconvénients. Généralement les compteurs mécaniques sont sensibles aux chocs et aux vibrations du véhicule. Un compteur mécanique peut se dérégler ou se bloquer en cas de choc ou vibration importante. Ainsi, les compteurs mécaniques existants ont une précision limitée par rapport aux compteurs électroniques.

### OBJET DE L'INVENTION

Un objet de la présente invention est donc de résoudre, ou au moins de minimiser les inconvénients des dispositifs existants décrits ci-dessus.

Un objet de la présente invention est de proposer un dispositif d'affichage présentant des moyens mécaniques actionnés par un moteur électrique pour transmettre une information devant être affichée.

Un autre objet de l'invention est de proposer un dispositif d'affichage muni de moyens d'illumination à la fois attractifs et ergonomiques.

Un autre objet est d'équiper un tableau de bord pour un véhicule automobile avec au moins un dispositif d'affichage.
Ces objets sont au moins partiellement atteints par la présente invention.

A cet effet, un premier aspect de l'invention se rapporte à un dispositif d'affichage pour véhicule automobile, comprenant:
- un cadran muni d'indications,
- une aiguille, montée sur un arbre et pointant vers les indications,
- un moteur électrique, apte à faire tourner l'arbre et l'aiguille via un mouvement mécanique, et

dans lequel le cadran est ajouré, de façon à faire apparaitre le mouvement mécanique
caractérisé en ce que le mouvement mécanique comprend un ressort de rappel agencé de façon à rappeler l'aiguille vers une position de repos.

La présente invention permet de retranscrire ou de convertir des données numériques en données analogiques « mécaniquement », c'est-à-dire en utilisant un mouvement mécanique s'inspirant des mouvements que l'on retrouve dans une pièce d'horlogerie. L'utilisation d'un mouvement mécanique qui reprend les principes des mouvements mécaniques utilisés dans l'horlogerie permet d'améliorer la précision du dispositif. Cela améliore également la fiabilité du dispositif.

La présente invention permet de convertir des données numériques en affichage analogique. Pour cela, le dispositif d'affichage comprend au moins une aiguille, au moins un moteur électrique correspondant ou connecté à l'aiguille et un mouvement mécanique. Par exemple, le signal d'une unité centrale d'un véhicule automobile comprenant des données numériques de vitesse et de régime moteur (tours minutes) est converti par le dispositif selon la présente invention dans un affichage analogique utilisant une ou plusieurs aiguilles et un cadran,
Dans le dispositif selon la présente invention, les éléments qui composent le dispositif sont synchronisés pour permettre d'afficher une indication correspondant à une information fournie par exemple par l'unité centrale du véhicule automobile, appelée information souhaitée. Par exemple, le moteur électrique exerce une force motrice correspondante sur un engrenage qui relie le moteur électrique à un arbre qui porte l'aiguille en fonction de la vitesse du véhicule, i.e. information souhaitée, pour induire un déplacement correspondant de l'aiguille sur le cadran.

Le mouvement mécanique, qui est une caractéristique mécanique qui attire l'oeil lorsqu'il est visible, est rendu visible pour l'utilisateur du dispositif selon l'invention, par exemple en utilisant un cadran ajouré. Pour faire apparaitre le mouvement, le cadran peut aussi être transparent. Autrement dit le module cadran, qui comprend le cadran, est arrangé pour faire apparaitre le mouvement mécanique.

Le module mécanique, qui comprend le mouvement mécanique, peut avantageusement comprendre des composants type squelette, comme des ponts, pour rendre visible certains éléments qui composent le mouvement. Avantageusement, le dispositif selon la présente invention comprend un module élastique. Le ressort de rappel est un exemple de module élastique. L'invention n'est pas limitée à un ressort de rappel. Les caractéristiques décrites ci-dessous pour l'exemple du ressort de rappel s'appliquent également à un autre module élastique qui a une fonction similaire au ressort de rappel et permet d'assurer une fonction de rappel.

Lorsque le moteur électrique est à une position constante, c'est-à-dire que l'aiguille est immobile sur une indication ou entre deux indications, les dents du rouage entre le moteur électrique et l'arbre porteur d'aiguille ne sont plus nécessairement en appui. Les vibrations du véhicule, par exemple induites par le moteur thermique ou électrique du véhicule ou le roulis du véhicule, peuvent induire une rotation des rouages sur une amplitude correspondant aux jeux d'engrenages, ce qui peut faire pivoter l'aiguille. Le ressort de rappel ou module élastique permet d'éviter que les vibrations ne puissent induire une rotation des mobiles de l'engrenage sur une plage correspondant aux jeux d'engrenages et ainsi une rotation de l'aiguille. Le ressort de rappel ou module élastique permet de maintenir l'engrenage en tension, autrement dit maintenir les dents en appui pour compenser ou éviter les jeux d'engrenages.

De préférence, l'aiguille présente un balourd influence la position de l'aiguille selon la gravité. Le ressort de rappel ou module élastique permet de contrer les effets de la gravité sur l'aiguille du au balourd
Le module élastique ou le ressort de rappel est apte à maintenir sous tension l'engrenage (ou le rouage) qui relie le moteur électrique à l'arbre porteur d'aiguille. Cette tension ou force a un effet sur l'aiguille qui est montée sur l'arbre à la sortie de l'engrenage. Cela permet d'éviter que l'aiguille ne bouge sur une amplitude correspondant aux jeux d'engrenages du rouage entre le moteur électrique et l'arbre. Le module élastique ou le ressort de rappel exerce une contrainte sur l'ensemble du rouage ou engrenage de façon à rappeler l'aiguille vers un position de repos. Cela permet d'éviter ou d'absorber les vibrations qui arrivent au niveau de l'aiguille pour maintenir la position de l'aiguille.

Le ressort de rappel contraint également l'aiguille dans un seul sens pour améliorer la précision du positionnement de cette dernière. Ce type de mouvement mécanique permet d'éviter la création d'un jeu d'engrenage assurant le retour de l'aiguille
Le module élastique ou le ressort de rappel est agencé pour rappeler l'aiguille vers une position de repos. Par exemple, la position de repos est la position du zéro. La position de repos est une position où le moteur électrique n'exerce plus de force motrice pour déplacer l'aiguille, autrement dit l'aiguille est stable: on peut être dans cette position de repos par exemple lorsque la vitesse du véhicule est constante ou stable.

De préférence, le retour de l'aiguille en sens inverse jusqu'à la remise à zéro se fait par la rotation inverse du moteur. Autrement dit, le moteur électrique fonctionne dans deux sens opposés respectivement une marche avant pour faire avancer l'aiguille dans le sens horaire ou en rotation inverse (marche inverse) pour faire reculer l'aiguille dans le sens antihoraire. Les éléments qui composent l'engrenage (ou le rouage) entre le moteur électrique et l'arbre pivotent également dans ces deux sens opposés, horaire et anti horaire. Le sens inverse permet de remettre l'aiguille jusqu'à sa position initiale qui correspond à l'indicateur zéro, on parle ainsi de remise à zéro. Le retour à zéro peut se faire directement ou par paliers. Autrement dit, la rotation inverse du moteur électrique permet de faire reculer l'aiguille en direction de l'indicateur zéro.

Cela permet de contrôler la position de l'aiguille dans le sens antihoraire pour qu'elle pointe vers le bon indicateur.

Avantageusement, un dispositif peut comprendre des moyens d'illumination aptes à changer d'état en étant synchronisés avec la rotation de la ou des aiguilles. Un changement d'état pour des moyens d'illumination ou moyens d'éclairage est défini notamment comme étant un allumage et une extinction, un changement de couleur dans tout le spectre de la lumière visible pour les yeux d'un utilisateur, un clignotement à différentes fréquences ou des combinaisons possible de ces changements d'état. Ainsi, les moyens d'illuminations sont synchronisés avec le module mécanique qui comprend le mouvement mécanique.

De préférence, le module électronique comprend une carte électronique, par exemple un circuit imprimé, qui pilote les moyens d'illuminations. De préférence, les moyens d'illuminations sont synchronisés avec le module mécanique, notamment les moteurs électriques.

Préférentiellement, le mouvement mécanique peut comprendre au moins un élément choisi parmi les éléments suivants un pignon d'entrée, un mobile et un râteau, pris isolément ou en combinaison. Tous ces éléments peuvent être montés de manière appropriée ou seulement certains d'entre eux. L'utilisateur va pouvoir regarder l'esthétique du dispositif d'affichage avec le mouvement mécanique complexe et se déplaçant lui rappelant la tradition et le savoir-faire horloger.

De préférence, le mouvement mécanique comprend une chaine cinématique avec un engrenage ou rouage pour chaque affichage sur le cadran. Le rouage peut comprendre un ou plusieurs éléments choisis parmi un pignon d'entrée, un mobile et un râteau, un cliquet, un renvoi, une roue, une came, un levier, pris isolément ou en combinaison, ou tout autre élément que l'on retrouve dans un engrenage d'un mouvement horloger. Par exemple, le mouvement comprend une chaine cinématique, par exemple un rouage ou un engrenage, pour contrôler l'aiguille des vitesses, et une autre chaine cinématique pour contrôler l'aiguille des tours minutes.

De préférence, l'engrenage ou la chaine cinématique qui relie le moteur électrique à l'arbre qui porte l'aiguille comprend au moins deux composants, par exemple deux râteaux, couplés entre eux. De préférence, le composant le plus proche du moteur électrique est couplé directement au moteur et a une fonction motrice. De préférence, le composant en bout de chaine cinématique est couplé directement au module élastique et a une fonction de rappel. L'indication ou l'affichage, par exemple l'arbre porteur de l'aiguille, est de préférence entre le composant le plus proche et le composant au bout de chaine.

Dans la chaine cinématique, un composant lié au moteur à une fonction moteur et le composant lié au module élastique a une fonction de rappel.

De préférence, s'il y a plusieurs chaines cinématiques qui commandent chacune un affichage, chaque chaine est indépendante, c'est-à-dire que le fonctionnement d'une chaine ne dépend pas du fonctionnement d'une autre chaine. De manière avantageuse, le dispositif peut présenter un module cadran, un module mécanique et un module électronique, le module mécanique étant intercalé entre le module cadran et le module électronique. Cette construction en trois agencements permet de monter séparément chacun des modules et ensuite de les assembler entre eux. D'autres constructions en sandwich avec les modules de cadran, électronique, et mécanique sont possibles. Cela facilite le montage du dispositif. Cela facilite aussi son démontage pour la maintenance par exemple.

De manière préférentielle, le module cadran peut comprendre le cadran avec les indications, l'aiguille, des ouvertures sur le cadran, un ensemble de zones diffusant de la lumière et des moyens d'illumination sous forme de LED. Les ouvertures forment les ajours permettant à l'utilisateur de voir le mouvement mécanique.

De manière préférentielle, le module cadran peut comprendre le cadran avec les indications et l'aiguille. Le module cadran peut comprendre des éléments pour rendre le mouvement au moins partiellement visible au travers du cadran du module de cadran. Par exemple, le cadran comprend des ajours ou des éléments transparents. De manière favorable, le mouvement mécanique peut être intégré dans le module mécanique. Autrement dit, le module mécanique comprend un mouvement mécanique. Les pièces mécaniques mobiles sont de ce fait regroupées et protégées à l'intérieur du module mécanique. De préférence, le mouvement mécanique est ainsi rendu visible ou en partie visible par des éléments du module de cadran. Par exemple, les éléments sont choisis parmi des ajours sur le cadran, des éléments transparents sur le cadran.

De préférence, le mouvement mécanique est rendu visible ou partiellement visible par des éléments du module mécanique. Les éléments sont par exemple des composants type squelette notamment des ponts ajourés ou autres composants ajourés.

De préférence, le mouvement est rendu visible ou partiellement visible par une combinaison d'éléments du module de cadran et d'éléments du mouvement.

De préférence, le module électronique comprend le moteur électrique. De préférence le module électronique comprend les moyens d'illumination, par exemple sous forme de LED. Le module électronique peut avantageusement comprendre le moteur électrique et des moyens d'illumination sous forme de LED. L'électronique est de préférence regroupée au niveau du module électronique. Les moyens d'illumination peuvent par exemple être partagés entre le module électronique et le module cadran. Par exemple, on peut avoir une carte électronique dans le module électronique qui commande des LED dans le module de cadran, notamment des LED montées dans l'aiguille ou agencées pour éclairer l'aiguille.

De préférence, le module électronique est agencé pour être connecté à l'unité centrale du véhicule automobile. Par exemple, le module électronique est agencé pour recevoir une information souhaitée, ou à afficher sur le dispositif, en provenance de l'unité centrale du véhicule automobile. Par exemple, l'information est un signal comprenant des données numériques, par exemple une vitesse du véhicule.

Le dispositif peut préférentiellement comprendre une deuxième aiguille montée sur un deuxième arbre et pointant vers des deuxièmes indications prévues au niveau du cadran, et un deuxième moteur électrique apte à faire tourner le deuxième arbre et la deuxième aiguille via le mouvement mécanique. Ainsi, le dispositif peut comprendre une chaine cinématique pour commander la première aiguille et une autre chaine cinématique pour commander la deuxième aiguille. Chaque chaine peut comprendre un moteur électrique, un engrenage, un arbre, une aiguille et un module élastique.

Les aiguilles peuvent favorablement être coaxiales, pour des questions de lisibilité des informations pointées par les aiguilles et lues par l'utilisateur. D'autres dispositions des aiguilles restent possibles, par exemple décalées l'une par rapport à l'autre.

La ou les aiguilles peuvent de manière avantageuse présenter chacune au moins une découpe, de façon à transmettre la lumière. La lumière émise par les LED va traverser la ou les aiguilles qui tournent, de façon à créer des effets lumineux pour l'utilisateur.

L'aiguille peut de manière préférentielle être une aiguille indiquant la vitesse d'un véhicule à moteur. Les indications sur le cadran donnant les valeurs de la vitesse, l'utilisateur connait ainsi la vitesse instantanée que prend son véhicule.

La deuxième aiguille peut être de manière favorable une aiguille indiquant le nombre de tours par minutes d'un moteur d'un véhicule à moteur thermique. Les indications sur le cadran donnant les valeurs du régime, l'utilisateur connaît ainsi le régime instantané du moteur thermique de son véhicule.

Avantageusement, le dispositif peut comprendre en outre un afficheur numérique, par exemple placé en position inférieure du cadran. Selon le choix de l'utilisateur, l'afficheur numérique peut présenter des indications de type vitesse précise du véhicule et/ou nombre de tours par minutes d'un moteur d'un véhicule à moteur thermique et/ou rapport de la boîte de vitesse et/ou heure et/ou température extérieure et/ou température intérieure de l'habitacle, etc. De préférence, l'afficheur numérique affiche des données numériques du véhicule. Ces données numériques sont aussi retranscrites en affichage analogique par le module électronique, le module mécanique et le module cadran.

Selon un deuxième aspect de l'invention, un tableau de bord d'un véhicule automobile est caractérisé en ce qu'il comprend au moins un dispositif d'affichage tel que décrit et revendiqué.

### BRÈVE DESCRIPTION DES FIGURES

D'autres avantages et caractéristiques apparaîtront à la lecture de la description de l'invention, ainsi que sur les figures annexées qui représentent un exemple de réalisation non limitatif de l'invention, et sur lesquelles:
- la Figure 1 montre une vue isométrique éclaté du dispositif d'affichage selon l'invention;
- la Figure 2 montre une vue isométrique du module cadran du dispositif d'affichage;
- la Figure 3 montre une vue en coupe du module cadran selon le plan diamétral D de la Figure 2;
- la Figure 4 montre une vue isométrique du module mécanique du dispositif d'affichage;
- la Figure 5 montre une vue du dessus du module mécanique du dispositif d'affichage;
- la Figure 6 montre une vue isométrique du mouvement mécanique du dispositif d'affichage;
- les Figures 7a et 7b sont respectivement une vue isométrique et une vue en coupe de l'aiguille selon le plan longitudinal A4;
- les Figures 8a et 8b sont respectivement une vue isométrique et une vue en coupe de la deuxième aiguille selon le plan longitudinal A6 ; et
- la Figure 9 représente un tableau de bord équipé avec deux dispositifs d'affichage selon l'invention, un en position centrale et un sur la droite du compteur

### DESCRIPTION D'EXEMPLES DE RÉALISATION DE L'INVENTION

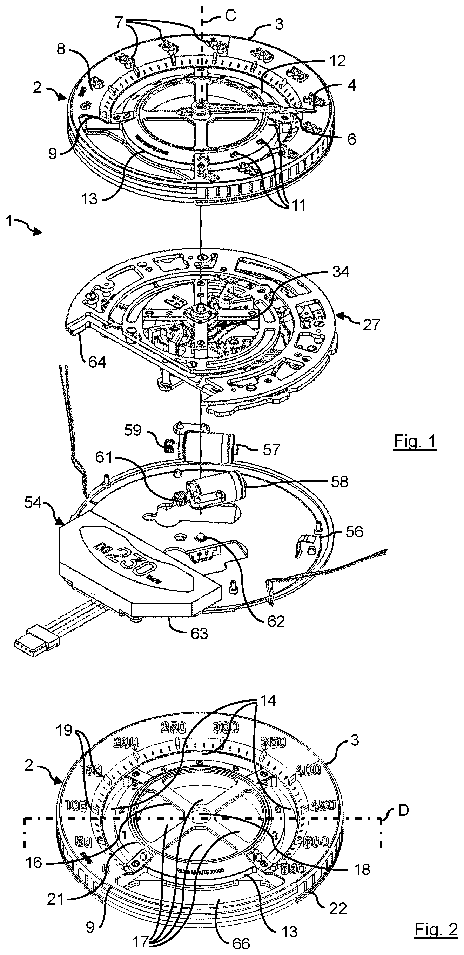

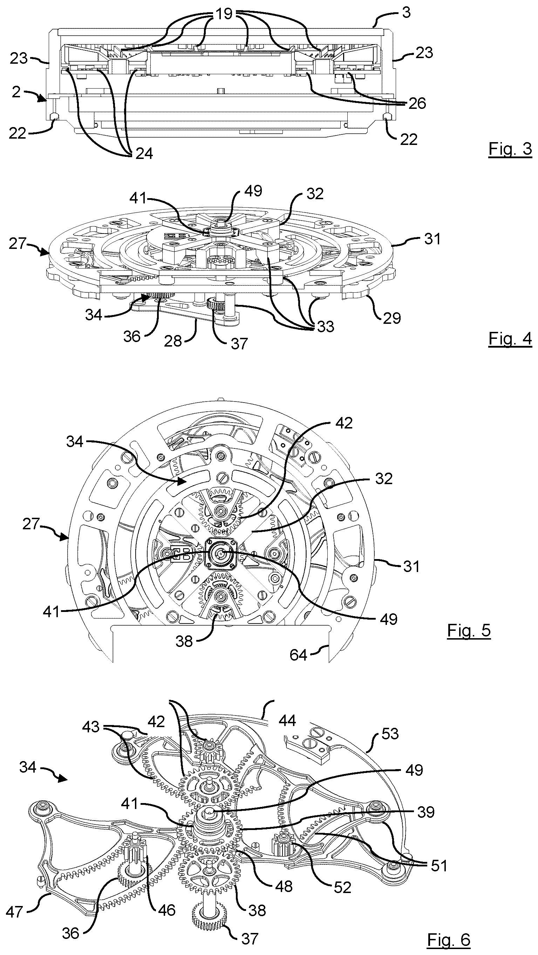

Comme cela est visible en Figs. 1, 2 et 3, un dispositif d'affichage 1 comprend une première partie sous la forme d'un module cadran 2 ou module cadran supérieur 2. Le module cadran 2 possède une forme globalement cylindrique. Le module cadran 2 présente un cadran de forme sensiblement ronde 3 et deux aiguilles 4 et 6.

Les deux aiguilles 4 et 6 sont coaxiales et tournent chacune dans un plan différent, par rapport à un axe central C passant par le centre du cadran 3. Une première aiguille 4 des deux aiguilles 4 et 6 est montée en étant superposée sur une deuxième aiguille 4 des deux aiguilles 4 et 6. La deuxième aiguille 6 est positionnée en premier à proximité du cadran 3.

Le cadran 3 comprend sur sa face supérieure des premières indications 7. Les premières indications 7 sont disposées en arc-de-cercle sur une face supérieure 8 d'un premier anneau extérieur 9. La première aiguille 4 pointe en direction de ces premières indications 7. Les premières indications 7 sont des nombres correspondant à la vitesse exprimée en kilomètres/heure pouvant être atteinte par le véhicule automobile. Dans ce cas, les premières indications 7 s'étalent de « 0 » à « 550 », par incrément de « 50 ».

Le cadran 3 comprend sur sa face supérieure des deuxièmes indications 11. Les deuxièmes indications 11 sont disposées en arc-de-cercle sur une face supérieure 12 d'un deuxième anneau intérieur 13. La deuxième aiguille 4 pointe en direction de ces deuxièmes indications 11. Les deuxièmes indications 11 sont des nombres correspondant à la vitesse de rotation du moteur thermique du véhicule automobile, exprimée en nombre de milliers de tours par minutes. Les deuxièmes indications 11 s'étalent de « 0 » à « 10 », par incrément de « 1 ».

Le deuxième anneau 13 est concentrique au premier anneau 9 et présente un diamètre extérieur inférieur à celui du premier anneau 9. Le deuxième anneau 13 est fixé au premier anneau 9 par exemple par l'intermédiaire de pattes de fixation et de vis appropriées. Dans cet exemple, en raison du dimensionnement du deuxième anneau 13, le module cadran 2 présente une série d'ouvertures, dans ce cas trois ouvertures 14 aménagées entre le premier anneau 9 et le deuxième anneau 13 (voir Fig. 2).

Le deuxième anneau 13 est également évidé en son centre et possède une croix centrale 16, délimitant quatre ouvertures ou secteurs 17 et une ouverture centrale 18. L'axe central C et les arbres de rotation des aiguilles 4 et 6 passent par le centre de l'ouverture centrale 18. A chaque première indication 7 correspond un index radial 19 sous la forme d'un petit parallélépipède. Le deuxième anneau 13 présente également une bande en arc de cercle 21 prévue entre la deuxième indication « 0 » et la deuxième indication « 10 ».

Les « 0 » des premières indications 7, les index radiaux 19, les deuxièmes indications 11 et la bande en arc de cercle 21 sont transparent et réalisés avec des matériaux diffusant la lumière, soit en céramique liquide ou avec des inserts en polymères translucides qui permettent un affichage lumineux.

Le module cadran 2 comprend des premiers moyens d'illumination, sous la forme d'une rampe de LED 22 disposée circulairement en arc de cercle sur le pourtour et à la base du premier anneau 9. La lumière émise par les LED est diffusée vers le haut en direction de l'utilisateur par une série de fentes de diffusion 23 orientées vers le haut.

Le module cadran 2 comprend des deuxièmes moyens d'illumination, sous la forme de rampes de LED 24 montées sous le premier et le deuxième anneau 9 et 13 sur des cartes de circuit imprimé 26. La lumière émise par les rampes de LED 24 traverse et illumine les premières indication 7, les index radiaux 19, les deuxièmes indications 11 et la bande en arc de cercle 21.

Le dispositif d'affichage 1 comprend une deuxième partie sous la forme d'un module mécanique central 27 (voir Figs. 1, 4 et 5). Le module mécanique 27 présente un pont inférieur 28, une platine 29, un pont de mécanisme 31 et une structure supérieure en croix 32. La platine 29 et le pont de mécanisme 31 possèdent une forme globalement ronde. Le pont inférieur 28, la platine 29, le pont de mécanisme 31 et la structure supérieure en croix 32 sont assemblées entre-elles par l'intermédiaire de plots, piliers et vis appropriés 33.

Un mouvement mécanique 34 est intégré dans le module mécanique 27 en étant maintenu par le pont inférieur 28, la platine 29, le pont de mécanisme 31 et la structure supérieure en croix 32. Le pont inférieur 28, la platine 29, le pont de mécanisme 31 et la structure supérieure en croix 32 sont de type squelette, en étant ajourés. Le mouvement mécanique 34 est ainsi rendu visible à travers les ajours du pont de mécanisme 31 et de la structure supérieure en croix 32 et à travers les ouvertures du cadran 3.

Le mouvement mécanique 34 comprend un premier pignon d'entrée de vitesse 36 qui va faire tourner en conséquence la première aiguille 4 et un premier pignon d'entrée de compte-tour 37 qui qui va faire tourner en conséquence la deuxième aiguille 6. Les pignons d'entrée de vitesse 36 et de compte tour 37 sont entrainés par deux moteurs électriques via des vis sans fin comme expliquée ci après.

Le premier pignon d'entrée de compte-tour 37 est directement relié à un pignon 38, venant en prise avec une roue de compte-tour 39, sur laquelle est monté un arbre central de compte-tour 41 portant l'aiguille de compte-tour 6. Deux mobiles de compte-tour 42 et deux râteaux de compte-tour 43 sont entrainés par la roue de compte-tour 39. Cette conception rappelle la tradition et le savoir-faire horloger.

Pour éviter la création d'un jeu d'engrenage et pour assurer un retour libre de l'aiguille de compte-tour 6, un ressort de rappel 44 vient appuyer sur l'un des deux râteaux de compte-tour 43. Le râteau de compte-tour 43 est de ce fait ramené vers sa position de départ, et la roue de compte-tour 39, l'arbre de compte-tour 41 et l'aiguille de compte-tour 6 sont contraints pour retourner vers la position « 0 ».

Le premier pignon d'entrée de vitesse 36 est directement relié à un pignon 46, qui engrène avec un râteau 47 à deux crémaillères pour rediriger le mouvement au centre sur une roue de vitesse 48, sur laquelle est monté un arbre central de vitesse 49 portant l'aiguille de vitesse 4. L'arbre de vitesse 49 et l'arbre de compte-tour 41 sont coaxiaux, l'arbre de compte-tour 41 étant enfiché sur l'arbre de vitesse 49. Deux râteaux de vitesse 51 et mobiles 52 sont entrainés par la roue de vitesse 48 et cette conception rappelle également la tradition et le savoir-faire horloger.

Pour éviter la création d'un jeu d'engrenage et pour assurer un retour libre de l'aiguille de vitesse 4, un ressort de rappel 53 vient appuyer sur l'un des deux râteaux de vitesse 51. Le râteau de vitesse 51 est ramené vers sa position de départ. La roue de vitesse 48, l'arbre de vitesse 49 et l'aiguille de vitesse 4 sont contraints en direction de la position « 0 ».

Le dispositif d'affichage 1 comprend une troisième partie sous la forme d'un module électronique de base 54 (voir Fig. 1). Le module cadran supérieur 2, le module mécanique central 27 et le module électronique 54 sont assemblés les uns sur les autres de manière homocentrique, afin de constituer le dispositif d'affichage 1.

Le module électronique 54 présente une carte de circuit imprimé de base 56. La carte de base 56 permet de communiquer avec l'unité centrale du véhicule automobile et reçoit les informations nécessaires ou souhaitées.

Le module électronique 54 comprend deux moteurs électriques 57 et 58 qui sont montés sur la carte de base 56. Le moteur de vitesse 57 entraine le premier pignon d'entrée de vitesse 36 du mouvement mécanique 34, via une vis sans fin de vitesse 59. Le moteur de compte-tour 58 entraine le premier pignon d'entrée de compte-tour 37 du mouvement mécanique 34, via une vis sans fin de compte-tour 61. Les moteurs 57 et 58 entrainent en rotation les aiguilles 4 et 6, de façon à permettre l'affichage de certaines données tels que la vitesse du véhicule automobile et le nombre de tours par minutes du moteur thermique.

Le module électronique 54 comprend des troisièmes moyens d'illumination sous forme d'une LED centrale 62. La lumière émise par la LED centrale 62 est diffusée vers le haut et illumine les aiguilles de vitesse 4 et de compte-tour 6.

Le module électronique 54 comprend un afficheur numérique 63. L'afficheur numérique 63 vient se placer dans un créneau 64 ménagée dans le module mécanique 27. L'afficheur numérique 63 est visible au travers d'une fenêtre 66 prévue en position inférieure du cadran 3 entre le premier anneau extérieur 9 et le deuxième anneau intérieur 13. L'afficheur numérique 63 va pouvoir présenter des indications de type vitesse précise atteinte par le véhicule et/ou rapport de vitesse engagé.

Pour permettre une illumination de l'aiguille de vitesse 4 et de l'aiguille de compte-tour 6, ces deux aiguilles 4 et 6 présentent chacune une découpe longitudinale 67 ménagée dans leur tige respective.

Les deux aiguilles présentent en outre chacune une section inférieure longitudinale et axiale 68, réalisée en matériau polymère transparent et servant de guide de lumière et transmettant la lumière émise par les troisièmes moyens d'illumination avec la LED centrale 62. Il est à noter que l'arbre de vitesse 49 est creux.

La partie électronique du dispositif d'affichage 1, les cartes de circuit imprimé 26 et la carte de base 56 pilotent les LED 22, 24 et 62 pour l'éclairage des aiguilles 4 et 6 et du cadran 3.

Une programmation adéquate de la carte de base 56 permet des changements d'état, notamment des illuminations des LED qui sont synchronisées avec la rotation des moteurs 57 et 58 et le module mécanique 27.

A titre d'exemple pour l'affichage des tours par minutes, les LED 24 qui illuminent les deuxièmes indications 11 changent d'intensité en fonction du déplacement de la deuxième aiguille 6. L'intensité lumineuse des LED 24 éclairants les nombres et la bande lumineuse en arc de cercle 21 augmente une fois que la deuxième aiguille 6 est passée dessus. Lorsque le régime moteur est à 0 tour/minute, tout est faiblement éclairé. Si le régime moteur est à 6000 tours/minutes, les deuxièmes indications 11 de « 0 » à « 6 » seront fortement illuminées et celles de « 7 » à « 10 » seront faiblement illuminées. De la même manière les LED peuvent passer en rouge et la zone rouge peut varier de « 7 » à « 10 » ou de « 9 » à « 10 » selon que le moteur est froid ou chaud.

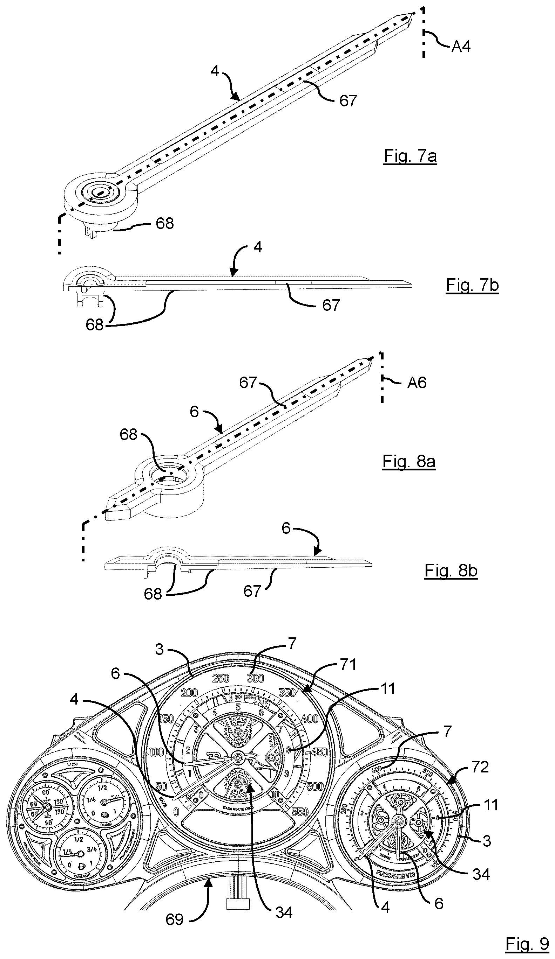

Comme le montre la Fig. 9, un tableau de bord 69 comprend un dispositif d'affichage central 71 et un dispositif d'affichage latéral droit 72, les deux selon l'invention, qui sont sensiblement analogues au dispositif d'affichage 1 décrit ci-dessus, et un dispositif d'affichage latéral gauche. Autrement dit, les dispositifs central 71 et latéral droit 72 comprennent chacun un mouvement mécanique (avec une ou plusieurs chaine cinématique) pour contrôler le déplacement des indicateurs. Le dispositif latéral gauche un compteur dit « classique » où l'aiguille est montée sur un arbre lié au moteur sans la chaine cinématique selon l'invention.

La présente invention n'est pas limitée aux modes de réalisation décrits et illustrés. De nombreuses modifications peuvent être réalisées, sans pour autant sortir du cadre défini par la portée du jeu de revendications.

Dans le cas présent, la description se rapporte à un compteur de vitesse et compte tours pour un véhicule automobile, mais ce dispositif d'affichage peut très bien être intégré dans une horloge ou tout autres types de dispositifs électromécaniques pour afficher des données complexes pouvant être retranscrites totalement mécaniquement.

## Revendications

1. Dispositif d'affichage pour véhicule automobile comprenant:
- un cadran (3) muni d'indications (7),
- une aiguille (4, 6), montée sur un arbre (41, 49) et pointant vers les indications (7, 11),
- un moteur électrique (57, 58), apte à faire tourner l'arbre (41, 49) et l'aiguille (4, 6) via un mouvement mécanique (34), et
dans lequel le cadran (3) est ajouré, de façon à faire apparaitre le mouvement mécanique (34),
**caractérisé en ce que** le mouvement mécanique (34) comprend un ressort de rappel (44, 53) agencé de façon à rappeler l'aiguille (4, 6) vers une position de repos.

2. Dispositif selon la revendication 1, dans lequel le moteur électrique (57,58) est apte à faire une rotation inverse pour remettre à zéro ladite aiguille (4,6).

3. Dispositif selon l'une des revendications 1 ou 2, dans lequel le dispositif comprend des moyens d'illumination (22, 24, 62), aptes à changer d'état en étant synchronisés avec la rotation de ladite aiguille (4, 6).

4. Dispositif selon l'une revendications 1 à 3, dans lequel le mouvement mécanique (34) comprend au moins un élément choisi parmi un pignon d'entrée (36, 37), un mobile (42, 46, 52) et un râteau (43, 47, 51).

5. Dispositif selon l'une quelconque des revendications précédentes, dans lequel le dispositif présente un module cadran (2), un module mécanique (27) et un module électronique (54), le module mécanique (27) étant intercalé entre le module cadran (2) et le module électronique (54).

6. Dispositif selon la revendication 5, dans lequel le module cadran (2) comprend le cadran (3) avec les indications, ladite aiguille (4, 6), des ouvertures (14, 17, 18), un ensemble de zones diffusant de la lumière (19, 21) et des moyens d'illumination sous forme de LED (22, 24).

7. Dispositif selon la revendication 5 ou 6, dans lequel le mouvement mécanique (34) est intégré dans le module mécanique (27).

8. Dispositif selon l'une quelconque des revendications 5 à 7, dans lequel le module électronique (54) comprend le moteur électrique (57, 58) et des moyens d'illumination sous forme de LED (62).

9. Dispositif selon l'une quelconque des revendications précédentes, dans lequel le dispositif comprend une deuxième aiguille (6) montée sur un deuxième arbre (41) et pointant vers des deuxièmes indications (11) prévues au niveau du cadran (3), et un deuxième moteur électrique (58) apte à faire tourner le deuxième arbre (41) et la deuxième aiguille (6) via le mouvement mécanique (34).

10. Dispositif selon la revendication 9, dans lequel les aiguilles (4, 6) sont coaxiales.

11. Dispositif selon l'une quelconque des revendications précédentes, dans lequel ladite aiguilles (4, 6) présent au moins une découpe (67), de façon à transmettre la lumière.

12. Dispositif selon l'une quelconque des revendications précédentes, dans lequel l'aiguille (4) est une aiguille indiquant la vitesse d'un véhicule à moteur.

13. Dispositif selon l'une quelconque des revendications 9 à 12, dans lequel la deuxième aiguille (6) est une aiguille indiquant le nombre de tours par minutes d'un moteur thermique d'un véhicule à moteur.

14. Dispositif selon l'une quelconque des revendications précédentes, dans lequel le dispositif comprend en outre un afficheur numérique (63) placé en position inférieure du cadran (3).

15. Tableau de bord pour un véhicule automobile, **caractérisé en ce qu'**il comprend au moins un dispositif d'affichage (1, 71, 72) selon l'une quelconque des revendications précédentes.
